(19) Europäisches Patentamt
European Patent Office
Office européen des brevets

(11) **EP 4 250 508 A1**

(12) **EUROPÄISCHE PATENTANMELDUNG**

(43) Veröffentlichungstag:
**27.09.2023   Patentblatt 2023/39**

(21) Anmeldenummer: **22163808.3**

(22) Anmeldetag: **23.03.2022**

(51) Internationale Patentklassifikation (IPC):
**H02J 3/00** (2006.01)    **H02J 3/46** (2006.01)

(52) Gemeinsame Patentklassifikation (CPC):
**H02J 3/004; H02J 3/008; H02J 3/466**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
  **98631 Grabfeld OT Nordheim (DE)**
• **Dölle, Oliver**
  **91052 Erlangen (DE)**
• **Schreck, Sebastian**
  **90439 Nürnberg (DE)**
• **Schütz, Thomas**
  **90765 Fürth (DE)**

(74) Vertreter: **Siemens Patent Attorneys**
**Postfach 22 16 34**
**80506 München (DE)**

(54)   **VERFAHREN ZUR PLAUSIBILITÄTSPRÜFUNG EINER PROGNOSE**

(57)   Es wird ein Verfahren zur Plausibilitätsprüfung einer Prognose hinsichtlich einer Menge an bereitstellbarer Energie in einem lokalen Energiemarkt vorgeschlagen, wobei der lokale Energiemarkt einen Prozessor (40) aufweist. Dabei weist das Verfahren folgende Schritte auf:
- Übermitteln, an den Prozessor (40), eines ersten Datensatzes mit einer Information über eine Prognose eines ersten Energieproduzenten (1), welche Energiemenge eine erste Energieerzeugungsanlage des ersten Energieproduzenten (1) in einem definierten Zeitraum bereitstellen wird;
- Übermitteln, an den Prozessor (40), von ein oder mehreren weiteren Datensätzen mit Informationen zu Einflussgrößen ($x_1$, $x_2$, ..., $x_p$), welche die Menge an bereitstellbarer Energie beeinflussen könnten;
- Berechnen, durch den Prozessor (40), einer Wahrscheinlichkeit (Y), dass die Prognose eingehalten werden kann, auf Basis der bereitgestellten Informationen in Bezug auf die Einflussgrößen;
- Vergleichen, durch den Prozessor (40), der berechneten Wahrscheinlichkeit mit einem vorgegebenen Grenzwert;
- bei Unterschreitung des Grenzwerts Übermitteln, veranlasst durch den Prozessor, eines entsprechenden Hinweises an den ersten Energieproduzenten.

FIG 1

EP 4 250 508 A1

**Beschreibung**

Die Erfindung betrifft ein Verfahren zur Plausibilitätsprüfung einer Prognose sowie eine Vorrichtung zur Plausibilitätsprüfung.

In einem lokalen Energie-Gesamtsystem, z. B. in einem Stadtviertel oder einer Gemeinde, seien n verschiedene Energie-Subsysteme, z. B. Gebäude, mit jeweils verschiedenen energietechnischen Anlagen, z. B. Energieerzeugungs-, Verbrauchs- oder Speicheranlagen, vorhanden. Die möglichst effiziente Allokation, d.h. Zuordnung und Verteilung, der im Gesamtsystem erzeugten und verbrauchten Energie sowie der Austausch auf dem jeweiligen Energienetz stellt ein zentrales Optimierungs-/ Koordinierungsproblem dar. Da aber jedes Energie-Subsystem nur Kenntnis über seine eigenen energietechnischen Anlagen besitzt, wird eine zentrale Koordinierungsplattform zum optimierten Austausch zwischen den Energie-Subsystemen und dem Energienetz unter Einhaltung der technischen Restriktionen des Energienetzes benötigt. Eine solche zentrale Koordinierungsplattform kann, wie beispielsweise in DE102018221156A1 (Siemens Aktiengesellschaft) 10.06.2020 beschrieben, durch einen Lokalen Energiemarkt (= LEM) bereitgestellt werden.

Die Teilnahme an dem Energiehandel auf dem LEM, z. B. an dem Day-Ahead- oder Intraday-Handel, birgt jedoch auch Risiken. Bei fehlerhaften Prognosen der bereitzustellenden Energiemenge können für den Energieanbieter zusätzliche Kosten entstehen: falls der Energieanbieter dem LEM nur eine geringere Energiemenge zur Verfügung stellen kann als er dem LEM vorher angeboten hat, muss er die Energiedifferenz aus anderen Quellen, z. B. einem übergeordneten Netz, beziehen und bezahlen.

Dieses Problem verstärkt sich insbesondere bei "disruptiven" Ereignissen, wenn aufgrund von Fehlern oder äußeren Einflüssen die Menge an bereitstellbarer Energie unerwartet abnimmt, z. B. bei Schnee auf einer PV-Anlage, einem Ausfall eines BHKW oder Windstille bei einer Windkraftanlage (PV = Photovoltaik; BHKW = Blockheizkraftwerk).

Der vorliegenden Erfindung liegt die Aufgabe zugrunde, eine Prognose hinsichtlich einer Menge an bereitstellbarer Energie in einem lokalen Energiemarkt zu verbessern.

Die Aufgabe wird durch ein Verfahren mit den Merkmalen des unabhängigen Patentanspruches 1 sowie durch eine Vorrichtung mit den Merkmalen des unabhängigen Patentanspruches 11 gelöst. In den abhängigen Patentansprüchen sind vorteilhafte Ausgestaltungen und Weiterbildungen der Erfindung angegeben.

Das erfindungsgemäße Verfahren dient zur Plausibilitätsprüfung einer Prognose eines ersten Energieproduzenten; dabei sagt die Prognose aus, welche Energiemenge eine erste Energieerzeugungsanlage des ersten Energieproduzenten in einem definierten Zeitraum in einem lokalen Energiemarkt bereitstellen wird. Im Folgenden wird, gemäß dem Sprachgebrauch in einem LEM, eine solche Prognose auch als "Gebot" bezeichnet. Gemäß dem Verfahren wird an einen Prozessor, der zur Plausibilitätsprüfung dem lokalen Energiemarkt zur Verfügung steht, ein erster Datensatz mit einer Information über die Prognose des ersten Energieproduzenten übermittelt. Gemäß dem Verfahren werden an den Prozessor ein oder mehrere weitere Datensätze mit Informationen zu Einflussgrößen übermittelt, welche die Menge an bereitstellbarer Energie beeinflussen könnten. Der Prozessor berechnet nachfolgend eine Wahrscheinlichkeit, dass die Prognose eingehalten werden kann. Diese Wahrscheinlichkeit kann daher mit dem Begriff "Confidence Rating" charakterisiert werden. Diese Berechnung der Wahrscheinlichkeit erfolgt auf Basis der bereitgestellten Informationen zu den Einflussgrößen. Nachfolgend vergleicht der Prozessor die berechnete Wahrscheinlichkeit mit einem vorgegebenen Grenzwert. Falls die berechnete Wahrscheinlichkeit den Grenzwert unterschreitet, veranlasst der Prozessor, dass ein entsprechender Hinweis an den ersten Energieproduzenten übermittelt wird. Das erfindungsgemäße Verfahren und/oder eine oder mehrere Funktionen, Merkmale und/oder Schritte des erfindungsgemäßen Verfahrens und/oder seiner Ausgestaltungen können computergestützt sein.

Die erfindungsgemäße Vorrichtung zur Plausibilitätsprüfung ist eingerichtet zur Ausführung des Verfahrens.

Eine grundlegende Idee der vorliegenden Erfindung ist, dass eine übergeordnete Instanz, d. h. die Vorrichtung zur Plausibilitätsprüfung, im Folgenden auch als: "Monitoringsystem" bezeichnet, die Plausibilität der eingehenden Prognosen prüft. Ein Aspekt der Erfindung ist also eine zentrale Einheit ("Intelligenz") des LEM, welche eingehenden Energiebereitstellungsangebote ein "Confidence Rating" zuordnet. Dieses Monitoringsystem, welches diese zentrale Institution des LEM bildet, verarbeitet die eingehenden Gebote und für die Plausibilitätsprüfung relevante Informationen wie z. B. Anlageninformationen, Wetterinformationen, gemessene Leistung, um zu bestimmen, inwiefern die eingehenden Gebote voraussichtlich eingehalten werden können ("Confidence Rating"). Somit ergibt sich als Output eine Wahrscheinlichkeit zwischen 0 und 1, wobei 1 besagt, dass das Gebot mit einer prognostizierten Wahrscheinlichkeit von 100% erfüllt werden kann . Anschließend wird dem ersten Energieproduzenten, der die Prognose abgegeben hat, bei Unterschreitung eines des Grenzwertes, der z. B. bei 0,5 liegen kann, eine Warnung ausgegeben, dass dieser sein Gebot noch einmal überarbeiten sollte.

Die Erfindung erhöht insgesamt die Robustheit eines LEM.

Durch die frühzeitige Erkennung von disruptiven Ereignissen kann die Qualität der Gebote bzgl. deren spätere Einhaltung verbessert werden. Dies erlaubt wiederum eine bessere Koordination innerhalb des LEM, um ggf. die Auslastung eines übergeordneten Netzes zu reduzieren.

Durch die Erfindung können Reservekapazitäten, z. B. Speicherbatterien, besser abgeschätzt und effizienter eingesetzt werden.

Durch die Erfindung werden die zusätzlichen Kosten aufgrund von Prognosefehlern für die Teilnehmer am LEM verringert. Dies reduziert wiederum den Anreiz bzw. die Notwendigkeit, konservative Gebote am LEM, z. B. nur 75 % der vorhergesagten PV-Erzeugung, zu platzieren. Infolgedessen steigert sich die lokale Ressourceneffizienz, da mehr erneuerbar erzeugte Energie am LEM angeboten bzw. gehandelt und somit dessen Potential voll ausgeschöpft wird. Der LEM entfernt sich dadurch von einer Business-Logik und nähert sich mehr an die physikalische Realität an.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung wird die Wahrscheinlichkeit mittels eines linearen Polynoms, z. B. gemäß

$$Y = \beta_0 + \beta_1 x_1 + \beta_2 x_2 + \ldots + \beta_p x_p$$

berechnet. Die Variablen $x_n$ (mit n = 1, 2, ..., p) sind Einflussgrößen, z. B. Außen-Temperatur, Globalstrahlung, Aufstellwinkel, Wolkenzug in den nächsten 15 min. Die $\beta_n$ sind Gewichtungsfaktoren der Einflussgrößen, mit n = 1, 2, ..., p; dabei können die Gewichtungsfaktoren mittels einer logistischen Regression aus historischen Daten gewonnen werden. $\beta_0$ steht für eine Konstante, welche für eine korrekte Berechnung der Wahrscheinlichkeit Y nötig sein kann. Das Ergebnis Y ist die gesuchte Wahrscheinlichkeit: Y=0 bedeutet, dass die erste Energieerzeugungsanlage vollständig ausfällt und keine Energie liefern kann; Y=1 bedeutet, dass die erste Energieerzeugungsanlage die prognostizierte Energiemenge vollständig liefern kann.

Gemäß einer bevorzugten Ausgestaltung der Erfindung wird die Wahrscheinlichkeit mittels eins neuronalen Netzes mit Sigmoid als Aktivierungsfunktion der Ausgangsschicht (Output Layer) berechnet. Die Bestimmung der Modellparameter erfolgt dabei mit der binären Kreuzentropie als Kostenfunktion. Die Kreuzentropie als Kostenfunktion dient nur zur Bestimmung der Parameter (Training des Modells). Im "laufenden Betrieb" benötigt das neuronale Netz diese Funktion nicht mehr; hier wird durch die Architektur des Output Layer (Sigmoid) sichergestellt, dass eine Wahrscheinlichkeit Y ausgegeben wird. Der Vorteil ist, dass es sich um ein komplett nicht-lineares System handelt, welches aber auch ein lineares Polynom abbilden kann.

Gemäß einer bevorzugten Ausgestaltung der Erfindung wird die Prognose mit einer oder mehr anderen Prognosen zu anderen Energieerzeugungsanlagen, die zu der ersten Energieerzeugungsanlage vergleichbar sind, verglichen. Im Gegensatz zur bisherigen Vorgehensweise, bei der jeder Energieproduzent eine eigene Prognose erstellt, ohne dass es einen Abgleich zwischen den Prognosen gibt, erfolgt eine Validierung der Vorhersagen auf Basis vergleichbarer Anlagen. Der Vorteil dabei ist, dass auch bei "dummen" Energieerzeugungsanlage, d. h. ohne eigene Sensoren, auf Basis der Vorhersagen anderer Energieproduzenten mit ähnlichen Energieerzeugungsanlage eine Überprüfung möglich ist, ob ihre Prognosen plausibel sind.

Gemäß einer bevorzugten Ausgestaltung der Erfindung wobei die räumliche Verteilung der ersten und der anderen Energieerzeugungsanlagen berücksichtigt wird, um Wettereinflüsse zu erkennen. Heutzutage gibt es eine sehr große Anzahl an Prosumern: Privathaushalte treten z. B. mit eigenen PV-Hausdachanlagen als Energieproduzenten in Erscheinung. Die Erfindung nutzt die dadurch verfügbare große Anzahl an Messstellen bzw. Sensoren und ihre flächendeckende örtliche Verteilung. Die räumliche Verteilung der Energieerzeugungsanlagen kann genutzt werden, um disruptive (lokale) Wettereinflüsse eher und auch mit einer höheren Wahrscheinlichkeit zu erkennen. Beispielsweise können bei einzelnen Energieerzeugungsanlagen auftretende externe Einflüsse wie Windstille, Schneebefall oder größere Wolkenfronten frühzeitig erkannt und auf die weiteren Energieerzeugungsanlagen des LEM übertragen werden. Auf diese Weise kann die Vorhersagequalität von erneuerbaren Energieerzeugungsanlagen erheblich verbessert werden.

Gemäß einer bevorzugten Ausgestaltung der Erfindung umfassen die Einflussgrößen Anlageninformationen der ersten Energieerzeugungsanlage, z. B. geographische Koordinaten, Ausrichtung, Aufstellungsort, Neigungswinkel der ersten Energieerzeugungsanlage, und/oder Anlageninformationen anderer Energieerzeugungsanlagen.

Zum Beispiel können die unterschiedlichen Aufstellungsspezifikationen der Energieerzeugungsanlagen genutzt werden. Bei privaten schneebedeckten PV-Anlagen muss beispielsweise oftmals abgewartet werden, dass eine PV-Module abdeckende und somit deren Stromproduktion beeinträchtigende Schneeschicht entweder abschmilzt oder abrutscht. Da beide Vorgänge sowohl von der Ausrichtung als auch dem Aufbauwinkel (Steilheit) der PV-Module abhängen, können diese Erscheinungen sehr gut auf andere Energieerzeugungsanlagen und/oder Energieerzeugungsanlagen-Spezifikationen übertragen werden. Dies ermöglicht beispielsweise ein sehr gutes Vorhersagen des Zeitpunktes, ab wann eine beschneite PV-Anlage wieder elektrische Energie generieren wird.

Dem LEM stehen nicht nur die einzelnen Daten des jeweiligen Energieproduzenten zur Verfügung, sondern darüber hinaus noch weitere (Mess-)Daten von anderen Energieproduzenten. Bei der Nutzung von Anlageninformationen anderer Energieerzeugungsanlagen, die der ersten Energieerzeugungsanlage gleichen (gleiches Produkt, gleicher oder ähnlicher Typ), kann ein charakteristisches Verhalten einer anderen Energieerzeugungsanlage, bevor es zu einem Ausfall der anderen Energieerzeugungsanlagen kam, dazu genutzt werden, einen bevorstehenden Ausfall der ersten Energieerzeugungsanlage vorherzusagen. Sind z. B. im LEM mehrere Energieproduzenten mit demselben BHKW angebunden, dann kann man ein charakteristisches Verhalten, welches alle diese BHKW vor einem Ausfall zeigen, dazu nutzen, einen Ausfall eines BHKW vorherzusagen.

Gemäß einer bevorzugten Ausgestaltung der Erfindung umfassen die Einflussgrößen Wetterdaten und/oder Wettervorhersagen. Die räumliche Verteilung der Energieerzeugungsanlagen kann genutzt werden, um disruptive (lokale) Wettereinflüsse eher und auch mit einer höheren Wahrscheinlichkeit zu erkennen. Beispielsweise können bei einzelnen Energieerzeugungsanlagen auftretende externe Einflüsse wie Windstille, Schneebefall oder größere Wolkenfronten frühzeitig erkannt und auf die weiteren Energieerzeugungsanlagen des LEM übertragen werden. Hierdurch kann die Vorhersagequalität von erneuerbaren Energieanlagen erheblich verbessert werden.

Gemäß einer bevorzugten Ausgestaltung der Erfindung umfassen die Einflussgrößen Angaben zu der Menge von in der Vergangenheit bereitgestellter Energie, von der ersten Energieerzeugungsanlage und/oder von anderen Energieerzeugungsanlagen. So kann eine Prognose, die bei einer bestimmten Wetterlage gemacht wird, mit früheren Prognosen, die bei gleichen Wetterlagen gemacht wurden, verglichen werden.

Gemäß einer bevorzugten Ausgestaltung der Erfindung umfassen die Einflussgrößen Prognosen in Bezug auf andere Energieerzeugungsanlagen, des ersten Energieproduzenten und/oder der anderer Energieproduzenten. So kann eine Prognose, die bei einer bestimmten Wetterlage und/oder bei einer bestimmten Konfiguration und/oder Zustand einer Energieerzeugungsanlage gemacht wird, mit früheren Prognosen, die bei gleichen bzw. ähnlichen Wetterlagen und/oder bei einer gleichen bzw. ähnlichen Konfiguration und/oder Zustand einer anderen Energieerzeugungsanlage gemacht wurden, verglichen werden.

Gemäß einer bevorzugten Ausgestaltung der Erfindung werden eine überarbeitete zweite und weitere Prognosen des ersten Energieproduzenten, die dem Prozessor übermittelt werden, nachdem ein oder mehrere Hinweise an den ersten Energieproduzenten übermittelt wurden, erneut auf Plausibilität geprüft. Dabei werden so lange Hinweise an den ersten Energieproduzenten übermittelt, bis die Wahrscheinlichkeit den definierten Grenzwert einhält oder überschreitet. Der Vorteil dabei ist, dass die Qualität der Prognosen nachhaltig geprüft und nachverfolgt wird, so dass eine bessere Koordination innerhalb des LEM erreicht wird.

Gemäß einer bevorzugten Ausgestaltung der Erfindung erfolgt die Prüfung von eingehenden Prognosen automatisiert. Der Vorteil dabei ist, dass der Aufwand, den ein Betreiber des LEM für die Plausibilitätsprüfung betreiben muss, vermindert wird.

Gemäß einer bevorzugten Ausgestaltung der Erfindung können Methoden des "Transfer Learning" angewendet werden, so dass beim Anschluss von neuen Energieproduzenten an den LEM bereits mit wenig zur Verfügung stehenden Trainingsdaten relativ gute Vorhersageergebnisse erzielt werden können.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert und nicht maßstäblich:

Figur 1    eine Darstellung einer Einordnung einer Plausibilitätsprüfung in einem LEM;

Figur 2    eine Darstellung von In- und Outputs einer Plausibilitätsprüfung; und

Figur 3    eine Darstellung, wie ein Wolkengebiet mehrere Energieerzeugungsanlagen beeinflusst.

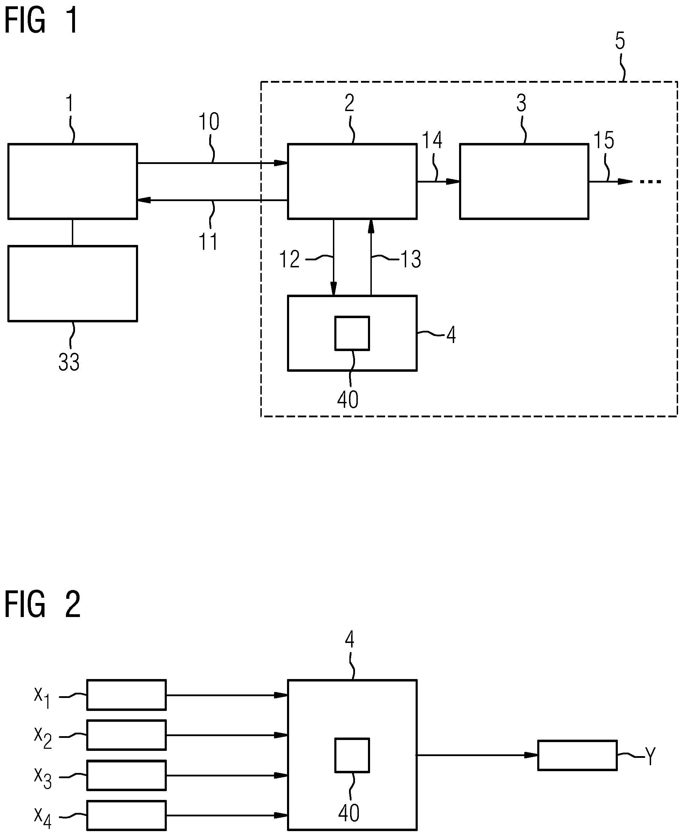

Figur 1 zeigt einen Energieproduzenten 1, der einen Datensatz mit Informationen zu einer Prognose an einen LEM 5 übermittelt 10, wobei die Prognose eine Aussage über eine Energiemenge macht, die eine erste Energieerzeugungsanlage 33 des ersten Energieproduzenten 1 in einem definierten Zeitraum, z.B. von 0:00 h bis 24:00 h des darauffolgenden Tages, in dem LEM 5 bereitstellen wird. In der Sprache des LEM 5 wird eine solche Prognose als "Gebot" bezeichnet. Der Datensatz gelangt zu einer Vorrichtung zur Vorverarbeitung 2, wo der Datensatz einer Vorverarbeitung unterzogen wird; beispielsweise wird geprüft, ob der Energieproduzent eine Lizenz hat, eine Prognose im LEM 5 abzugeben. Von dort wird der Datensatz an eine Vorrichtung zur Plausibilitätsprüfung 4 übertragen 12, welche einen Prozessor 40 aufweist.

Die Vorrichtung zur Plausibilitätsprüfung 4 empfängt außerdem ein oder mehrere weitere Datensätze mit Informationen zu Einflussgrößen $x_1$, $x_2$, ..., $x_p$, welche die Menge an bereitstellbarer Energie beeinflussen könnten. Die Vorrichtung zur Plausibilitätsprüfung 4 berechnet, mithilfe des Prozessors 40, in einem nachfolgenden Schritt, auf Basis der bereitgestellten Informationen zu den Einflussgrößen, eine Wahrscheinlichkeit, dass die Prognose eintreffen wird. Die Vorrichtung zur Plausibilitätsprüfung 4 vergleicht, mithilfe des Prozessors 40, in einem nachfolgenden Schritt die berechnete Wahrscheinlichkeit mit einem vorgegebenen Grenzwert.

Falls die berechnete Wahrscheinlichkeit den Grenzwert unterschreitet, veranlasst 13 die Vorrichtung zur Plausibilitätsprüfung 4 die Vorrichtung zur Vorverarbeitung 2, einen entsprechenden Hinweis 11 an den ersten Energieproduzenten 1 zu übermitteln.

In dem anderen Fall, dass die berechnete Wahrscheinlichkeit den Grenzwert erreicht oder überschreitet, veranlasst 13 die Vorrichtung zur Plausibilitätsprüfung 4 die Vorrichtung zur Vorverarbeitung 2, die Prognose weiterzuverarbeiten und an eine Vorrichtung zum Order Matching 3 zu übergeben 14.

Figur 2 zeigt eine Darstellung von In- und Outputs einer Plausibilitätsprüfung 4. Ein erster Input (Einflussgröße) $x_1$ sind Informationen zur ersten Energieerzeugungsanlage wie z. B. Koordinaten, Nennleistung, Aufstellungsspezifikationen (z. B. Ausrichtung, Aufstellungsort, Neigungswinkel). Ein zweiter Input (Einflussgröße) $x_2$ sind Informationen von externen Anbietern wie z. B. Wettervorhersagen und Wetterdaten. Ein dritter Input (Einflussgröße) $x_3$ sind Informationen zur generierten Leistung in der Vergangenheit; dabei sind sowohl Werte der ersten Energieerzeugungsanlage als auch Werte anderer vergleichbarer Energieerzeugungsanlage im LEM 5 von Interesse. Ein vierter Input (Einflussgröße) $x_4$ sind Informationen zur Prognose, d. h. zur angebotenen Leistung; neben der Prognose zur ersten Energieerzeugungsanlage sind auch Prognosen zu anderen vergleichbaren Energieerzeugungsanlage im LEM 5 von Interesse. Der Output Y der Plausibilitätsprüfung 4 ist eine Wahrscheinlichkeit, mit der Prognose voraussichtlich eingehalten werden kann.

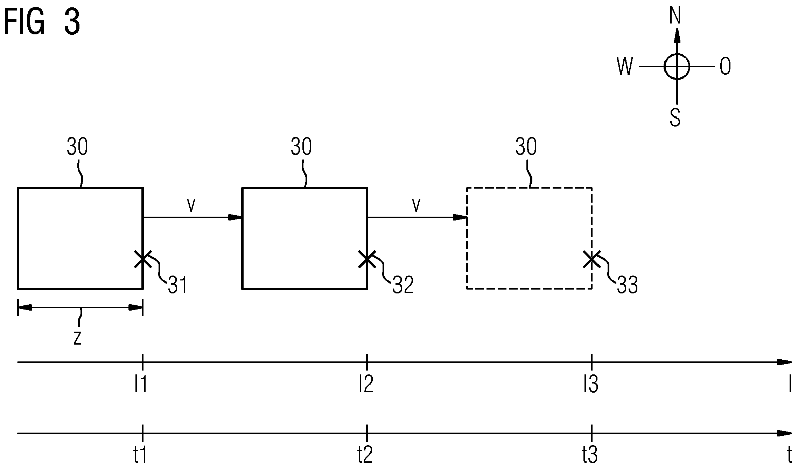

Figur 3 zeigt eine Darstellung, wie die räumliche Verteilung einer ersten und anderer Energieerzeugungsanlagen berücksichtigt wird, um Wettereinflüsse zu erkennen. Ein Wolkengebiet 30 zieht tagsüber mit einem Westwind der Geschwindigkeit v über drei Photovoltaik-Energieerzeugungsanlagen 31, 32, 33 hinweg, die in der West-Ost-Zugrichtung des Wolkengebietes 30 an den Orten 11, 12, 13 angeordnet sind. Dabei liegen die Orte 13 und 12 in einem Abstand 13-12 voneinander und die Orte 12 und 11 in einem Abstand 12-11 voneinander. Somit erreicht das Wolkengebiet 30 die drei Photovoltaik-Energieerzeugungsanlagen 31, 32, 33 nacheinander zu den Zeitpunkten t1, t2 und t3. Da das Wolkengebiet 30 in seiner Zugrichtung eine Ausdehnung z aufweist, wird jede der drei Photovoltaik-Energieerzeugungsanlagen 31, 32, 33 während eines Zeitraums $\Delta t = z/v$ von dem Wolkengebiet 30 bedeckt.

Bringt das Wolkengebiet 30 keinen Niederschlag oder Regen, so wird zu den Zeitpunkten t1, t2 und t3 aufgrund der einsetzenden Beschattung die Energieproduktion der drei Photovoltaik-Energieerzeugungsanlagen 31, 32, 33 jeweils absinken und während des Zeitraums $\Delta t$ auf dem abgesunkenen Niveau bleiben, bevor die Energieproduktion nach dem Durchzug des Wolkengebiets 30 aufgrund der direkten Sonnenbestrahlung wieder ansteigt. Aus dem Zeitpunkt t1, zu dem die Energieproduktion an der ersten Photovoltaik-Energieerzeugungsanlage 31 absinkt, den Abständen 12-11 und 13-12 sowie der Windgeschwindigkeit v, mit der das Wolkengebiet 30 über die Photovoltaik-Energieerzeugungsanlagen 31, 32, 33 hinweg zieht, können die Zeitpunkte t2, t3 berechnet werden, zu denen die beiden anderen Photovoltaik-Energieerzeugungsanlagen 32, 33 ebenfalls ein Absinken der Energieproduktion erfahren werden. Analog verhält es sich mit dem Wiederansteigen der Energieproduktion nach dem Durchzug des Wolkengebiets 30.

Bringt das Wolkengebiet 30 Schneefall, so wird aufgrund der Beschneiung der PV-Module der drei Photovoltaik-Energieerzeugungsanlagen 31, 32, 33 die Energieproduktion der drei Photovoltaik-Energieerzeugungsanlagen 31, 32, 33 zu den Zeitpunkten t1, t2 und t3 jeweils absinken und solange auf dem abgesunkenen Niveau bleiben, bis die PV-Module wieder von der Schneedecke befreit sind, z. B. durch Abkehren, Abrutschen oder Abschmelzen. Bei Schneefall sind zumindest die Zeitpunkte t2, t3 des Absinkens der Energieproduktion aus dem Absinken bei der ersten Photovoltaik-Energieerzeugungsanlage 31 berechenbar. Die Zeitpunkte, zu denen die PV-Module wieder von Schnee befreit sind und es zu einem Wiederansteigen der Energieproduktion kommt, können nicht allein aus der Geschwindigkeit des Wolkengebiets 30 abgeleitet werden, da hier auch andere Einflüsse wie Lage, Ausrichtung und Neigungswinkel der PV-Module eine Rolle spielen.

**Patentansprüche**

1. Verfahren zur Plausibilitätsprüfung einer Prognose hinsichtlich einer Menge an bereitstellbarer Energie in einem lokalen Energiemarkt, wobei der lokale Energiemarkt einen Prozessor (40) aufweist, aufweisend folgende Schritte:

   - Übermitteln, an den Prozessor (40), eines ersten Datensatzes mit einer Information über eine Prognose eines ersten Energieproduzenten (1), welche Energiemenge eine erste Energieerzeugungsanlage des ersten Energieproduzenten (1) in einem definierten Zeitraum bereitstellen wird;
   - Übermitteln, an den Prozessor (40), von ein oder mehreren weiteren Datensätzen mit Informationen zu Einflussgrößen ($x_1$, $x_2$, ..., $x_p$), welche die Menge an bereitstellbarer Energie beeinflussen könnten;
   - Berechnen, durch den Prozessor (40), einer Wahrscheinlichkeit (Y), dass die Prognose eingehalten werden kann, auf Basis der bereitgestellten Informationen in Bezug auf die Einflussgrößen;
   - Vergleichen, durch den Prozessor (40), der berechneten Wahrscheinlichkeit mit einem vorgegebenen Grenzwert;
   - bei Unterschreitung des Grenzwerts Übermitteln, veranlasst durch den Prozessor (40), eines entsprechenden Hinweises an den ersten Energieproduzenten.

**2.** Verfahren nach Anspruch 1,

wobei die Wahrscheinlichkeit (Y) mittels eines linearen Polynoms

$$Y = \beta_0 + \beta_1 x_1 + \beta_2 x_2 + \ldots + \beta_p x_p$$

wobei $\beta_n$ Gewichtungsfaktoren der Einflussgrößen sind, oder mittels eines neuronales Netzes mit Sigmoid als Aktivierungsfunktion der Ausgangsschicht berechnet wird.

**3.** Verfahren nach Anspruch 2,
wobei die Gewichtungsfaktoren $\beta_n$ mittels einer logistischen Regression aus historischen Daten gewonnen werden.

**4.** Verfahren nach einem der vorhergehenden Ansprüche,
wobei die Prognose mit einer oder mehr anderen Prognosen zu anderen Energieerzeugungsanlagen, die zu der ersten Energieerzeugungsanlage vergleichbar sind, verglichen wird.

**5.** Verfahren nach Anspruch 4,
wobei die räumliche Verteilung der ersten und der anderen Energieerzeugungsanlagen berücksichtigt wird, um Wettereinflüsse zu erkennen.

**6.** Verfahren nach einem der vorhergehenden Ansprüche,
wobei die Einflussgrößen Anlageninformationen umfassen, z. B. geographische Koordinaten, Ausrichtung, Aufstellungsort, Neigungswinkel der ersten Energieerzeugungsanlage.

**7.** Verfahren nach einem der vorhergehenden Ansprüche,
wobei die Einflussgrößen Wetterdaten und/oder Wettervorhersagen umfassen.

**8.** Verfahren nach einem der vorhergehenden Ansprüche,
wobei die Einflussgrößen Angaben zu der Menge von in der Vergangenheit bereitgestellter Energie umfassen, von der ersten Energieerzeugungsanlage und/oder von anderen Energieerzeugungsanlagen.

**9.** Verfahren nach einem der vorhergehenden Ansprüche,
wobei die Einflussgrößen Prognosen in Bezug auf andere Energieerzeugungsanlagen, des ersten Energieproduzenten und/oder der anderer Energieproduzenten, umfassen.

**10.** Verfahren nach einem der vorhergehenden Ansprüche,
wobei eine überarbeitete zweite und weitere Prognosen des ersten Energieproduzenten (1), die dem Prozessor (40) übermittelt werden, nachdem ein oder mehrere Hinweise an den ersten Energieproduzenten (1) übermittelt wurden, erneut auf Plausibilität geprüft werden, und solange Hinweise an den ersten Energieproduzenten (1) übermittelt werden, bis die Wahrscheinlichkeit (Y) den definierten Grenzwert einhält oder überschreitet.

**11.** Verfahren nach einem der vorhergehenden Ansprüche,
wobei die Prüfung von eingehenden Prognosen automatisiert erfolgt.

**12.** Vorrichtung (4) zur Plausibilitätsprüfung, eingerichtet zur Ausführung des Verfahrens nach einem der vorhergehenden Ansprüche.

FIG 1

FIG 2

FIG 3

Europäisches
Patentamt

European
Patent Office

Office européen
des brevets

# EUROPÄISCHER RECHERCHENBERICHT

Nummer der Anmeldung

EP 22 16 3808

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 872 719 A1 (SIEMENS AG [DE]) 1. September 2021 (2021-09-01) | 1-3,6-12 | INV. H02J3/00 H02J3/46 |
| A | * Abbildung 1 * * Absatz [0013] - Absatz [0021] * * Absatz [0045] - Absatz [0054] * ----- | 4,5 | |
| A | KOU JIAHAO ET AL: "Photovoltaic power forecasting based on artificial neural network and meteorological data", 2013 IEEE INTERNATIONAL CONFERENCE OF IEEE REGION 10 (TENCON 2013), IEEE, 22. Oktober 2013 (2013-10-22), Seiten 1-4, XP032553783, ISSN: 2159-3442, DOI: 10.1109/TENCON.2013.6718512 ISBN: 978-1-4799-2825-5 [gefunden am 2014-01-21] * Abschnitt III * ----- | 1-12 | |
| A | WANG FEI ET AL: "A satellite image data based ultra-short-term solar PV power forecasting method considering cloud information from neighboring plant", ENERGY, ELSEVIER, AMSTERDAM, NL, Bd. 238, 3. September 2021 (2021-09-03), XP086874745, ISSN: 0360-5442, DOI: 10.1016/J.ENERGY.2021.121946 [gefunden am 2021-09-03] * Zusammenfassung * ----- | 1-12 | **RECHERCHIERTE SACHGEBIETE (IPC)** H02J |
| A | JP 2021 013231 A (MITSUBISHI RES INSTITUTE INC) 4. Februar 2021 (2021-02-04) * Absatz [0052] * ----- | 1,12 | |

Der vorliegende Recherchenbericht wurde für alle Patentansprüche erstellt

| Recherchenort | Abschlußdatum der Recherche | Prüfer |
|---|---|---|
| München | 7. September 2022 | Chabas, Julien |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 16 3808

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2022

| Im Recherchenbericht angeführtes Patentdokument | | Datum der Veröffentlichung | Mitglied(er) der Patentfamilie | | Datum der Veröffentlichung |
|---|---|---|---|---|---|
| EP 3872719 | A1 | 01-09-2021 | EP | 3872719 A1 | 01-09-2021 |
| | | | WO | 2021170262 A1 | 02-09-2021 |
| JP 2021013231 | A | 04-02-2021 | JP | 7074724 B2 | 24-05-2022 |
| | | | JP | 2021013231 A | 04-02-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018221156 A1